# EUROPÄISCHE PATENTSCHRIFT

(11) **EP 2 941 791 B1**
(45) Veröffentlichungstag und Bekanntmachung des Hinweises auf die Patenterteilung: **17.07.2019**
(21) Anmeldenummer: 13801579.7
(22) Anmeldetag: 06.12.2013
(51) Int. Cl.: H01M 8/0258, H01M 8/0267, H01M 8/1018, H01M 8/241

(54) **BRENNSTOFFZELLE MIT MINDESTENS EINER AKTIVEN FLÄCHENSCHICHT**
FUEL CELL HAVING AT LEAST ONE ACTIVE SURFACE LAYER
PILE À COMBUSTIBLE COMPORTANT AU MOINS UNE COUCHE PLANE ACTIVE

(30) Priorität: 07.01.2013 DE 102013200112
(43) Veröffentlichungstag der Anmeldung: 11.11.2015
(73) Patentinhaber: Bayerische Motoren Werke Aktiengesellschaft, 80809 München (DE)
(72) Erfinder: BAUER, Michael, 85774 Unterföhring (DE); BUCHNER, Andreas, 82237 Steinebach (DE); HAASE, Stefan, 85247 Schwabhausen (DE)
(86) Internationale Anmeldenummer: PCT/EP2013/075766
(87) Internationale Veröffentlichungsnummer: WO 2014/106560

(56) Entgegenhaltungen:
- US-A1- 2002 172 852
- US-A1- 2004 048 141
- US-A1- 2004 101 738
- US-A1- 2007 231 666
- US-A1- 2011 070 519

## Beschreibung

Aus dem Stand der Technik bekannt sind Gegenstände gemäß den veröffentlichten Druckschriften US 2004/101738 A1, US 2007/231666 A1, US 2002/172852 A1, US 2011/070519 A1 und US 2004/048141 A1.

Die Erfindung betrifft eine Brennstoffzelle mit einem Anoden-Kathoden-Stapel, der mindestens eine aktive Flächenschicht umfasst, die mit einer ersten Kanalstruktur mit einer Vielzahl erster Kanäle zum Leiten eines ersten Fluides in einer ersten Richtung über die Flächenschicht gestaltet ist, die mit einer zweiten Kanalstruktur mit einer Vielzahl zweiter Kanäle zum Leiten eines zweiten Fluides in einer zweiten Richtung über die Flächenschicht gestaltet ist, wobei sich die zweite Richtung im Wesentlichen quer zur ersten Richtung erstreckt, die mit einer ersten Zuleitstruktur zum Zuleiten des ersten Fluides in die Vielzahl erster Kanäle gestaltet ist und die mit einer zweiten Zuleitstruktur zum Zuleiten des zweiten Fluides in die Vielzahl zweiter Kanäle gestaltet ist. Ferner betrifft die Erfindung ein Verwenden einer derartigen Brennstoffzelle an einem Kraftfahrzeug.

Brennstoffzellen der erfindungsgemäßen Art sind insbesondere als eine Polymerelektrolyt-Brennstoffzelle (Polymer Electrolyte Fuel Cell (PEFC), Proton Exchange Membrane Fuel Cell (PEMFC)) mit einem Anoden-Kathoden-Stapel (Bipolar-Plattenstapel) gestaltet, der eine Vielzahl aktiver Flächenschichten umfasst. Die einzelne Flächenschicht ist mit einer Anode und einer Kathode gestaltet, die von einer Membran getrennt sind. Damit in der Membran ein Protonentransport stattfinden kann, müssen in die Flächenschicht als Reaktionsfluide Wasserstoff (in Form von Gas) und Sauerstoff (in Form von Luft) sowie gegebenenfalls ein Kühlmittel (in Form von Flüssigwasser) zugeführt werden.

Dazu ist die einzelne Flächenschicht mit einer ersten Kanalstruktur zum Leiten eines ersten Fluides über die Flächenschicht und einer erste Zuleitstruktur zum Zuleiten des ersten Reaktionsfluids in die erste Kanalstruktur gestaltet. Ferner ist an der Flächenschicht eine zweite Kanalstruktur zum Leiten des zweiten Fluides über die Flächenschicht und eine zweite Zuleitstruktur zum Zuleiten des zweiten Fluides in die zweite Kanalstruktur vorgesehen. Die einzelnen Kanalstrukturen sind jeweils mit einer Vielzahl nebeneinander liegender Kanäle gestaltet, die sich auf diese Weise über die gesamte Fläche der Flächenschicht erstrecken. Die Zuleitstrukturen befinden sich an den Rändern der Flächenschicht und dienen dazu, das jeweilige Fluid möglichst gleichmäßig in die Vielzahl zugehöriger Kanäle einzuleiten. Die Zuleitstrukturen können als so genannte interne Manifolds in einer die Zuleitstruktur abbildenden Platte integriert sein. Alternativ können die Zuleitstrukturen als so genannte externe Manifolds gestaltet sein. Bei dieser Gestaltung sind die Zuleitstrukturen als eigenständige Bauteile außen an den Anoden-Kathoden-Stapel angeschlossen.

Aus Kosten und Gewichtsgründen ist diese Art der externen Manifolds zu bevorzugen. Im Hinblick auf eine Abdichtung einer sich dann ergebenden Nahtstelle zwischen den externen Manifolds und dem Anoden-Kathoden-Stapel sind solche Gestaltungen jedoch nicht unproblematisch. Dies ist insbesondere der Fall, wenn für das Zuleiten des ersten und zweiten Fluides zueinander quer verlaufende Kanalstrukturen, so genannte Cross-Flow-Fields, verwendet werden sollen. Für solche Strukturen ist es nämlich erforderlich, Manifolds an drei bis vier Rändern der dabei rechteckigen Flächenschichten anzuordnen.

Gemäß der Erfindung ist eine Brennstoffzelle mit einem Anoden-Kathoden-Stapel geschaffen, der mindestens eine aktive Flächenschicht umfasst, die mit einer ersten Kanalstruktur mit einer Vielzahl erster Kanäle zum Leiten eines ersten Fluides in einer ersten Richtung über die Flächenschicht gestaltet ist, die mit einer zweiten Kanalstruktur mit einer Vielzahl zweiter Kanäle zum Leiten eines zweiten Fluides in einer zweiten Richtung über die Flächenschicht gestaltet ist, wobei sich die zweite Richtung im Wesentlichen quer zur ersten Richtung erstreckt, die mit einer ersten Zuleitstruktur zum Zuleiten des ersten Fluides in die Vielzahl erster Kanäle gestaltet ist und die mit einer zweiten Zuleitstruktur zum Zuleiten des zweiten Fluides in die Vielzahl zweiter Kanäle gestaltet ist. Erfindungsgemäß sind die erste Zuleitstruktur und die zweite Zuleitstruktur beide an einem ersten Rand der Flächenschicht angeordnet und die erste Zuleitstruktur weist zusätzlich einen Randkanal zum Zuleiten des ersten Fluides an einen zum ersten Rand quergerichteten, zweiten Rand der Flächenschicht auf.

Mit der erfindungsgemäßen Gestaltung ist es möglich ein Cross-Flow-Field zu realisieren, das mit nur zwei externen Manifolds auskommt. Die Kosten und Komplexität der erfindungsgemäßen Lösung sind vergleichsweise entsprechend gering.

Dazu werden erfindungsgemäß an einem Rand der jeweiligen Flächenschicht beide Fluide zugeleitet und es wird dann eines der Fluide mittels eines Randkanals quer zu diesem ersten Rand entlang eines zweiten Rands der Flächenschicht geleitet. Diese Art der seitlichen Umleitung des ersten Fluides an einen zweiten Rand der Flächenschicht gemäß der Erfindung wird vorzugsweise mit dem Reaktionsgas Wasserstoff durchgeführt. Wasserstoff weist eine geringe Viskosität auf, so dass ein Umleiten auch in kleinem Bauraum möglich ist. Dabei kann für den Randkanal ein ohnehin an der Flächenschicht vorhandener Bauraum unterhalb einer Dichtung verwendet werden. Ferner kann Bauraum für sonst erforderliche Manifolds an den weiteren Rändern des Stapels eingespart werden. Das Gesamtvolumen des erfindungsgemäßen Anoden-Kathoden-Stapels kann damit kleiner ausfallen, als bei herkömmlichen Stapeln. Darüber hinaus sind die oben genannten Abdichtungsprobleme bei der erfindungsgemäßen Lösung besonders gering.

Bei einer vorteilhaften Gestaltung der derartigen erfindungsgemäßen Brennstoffzelle ist die Flächenschicht rechteckig gestaltet, wobei dann der erste Rand eine erste Längsseite dieser Rechteckform ist und der zweite Rand eine zur ersten Längsseite benachbarte, zweite Längsseite der Rechteckform ist.

Der Randkanal zum Zuleiten des ersten Fluides erstreckt sich entlang des zweiten Randes der Flächenschicht. Mit einem derart langen Randkanal kann das erste Fluid über den gesamten zweiten Rand hinweg in dort beginnende Kanäle einer zugehörigen Kanalstruktur umgeleitet werden.

Dabei ist an einem, dem zweiten Rand gegenüberliegenden, dritten Rand der Flächenschicht ein weiterer Randkanal zum Ableiten des ersten Fluides aus der Vielzahl erster Kanäle entlang des dritten Randes der Flächenschicht ausgebildet. Auf diese Weise ist eine Z-Form gebildet, bei der das erste Fluid an einer Seite des Anoden-Kathoden-Stapels zugeleitet, dann quer zur vorhergehenden Richtung durch den Stapel hindurchgeleitet und dann an der anderen Seite wiederum quer zur vorhergehenden Richtung abgeleitet wird.

Der Randkanal zum Zuleiten des ersten Fluides erstreckt sich entlang nur eines Teils des zweiten Randes, die ersten Kanäle sind in der zugehörigen Flächenschicht S-förmig verlaufend gestaltet und an einem, dem zweiten Rand gegenüberliegenden, dritten Rand der Flächenschicht erstreckt sich ein weiterer Randkanal zum Ableiten des ersten Fluides aus der Vielzahl erster Kanäle entlang nur eines Teils des gesamten dritten Randes. Mit dieser Bauform kann der zur Verfügung stehende Bauraum besonders effizient genutzt werden.

Die zweite Zuleitstruktur ist bei der erfindungsgemäßen Brennstoffzelle bevorzugt mit einem sich senkrecht zu der Flächenschicht erstreckenden, zweiten Zuführkanal zum Zuführen des zweiten Fluides gestaltet, der am ersten Rand in dessen vom zweiten Rand abgewandten Eckbereich angeordnet ist. Dabei wird das zweite Fluid, welches vorzugsweise Luft ist, insbesondere schräg zur ersten und zweiten Richtung bzw. S-förmig über die Flächenschicht hinweg geleitet. Bei der S-förmigen Kanalführung wird das zweite Fluid zunächst in der ersten Richtung, dann in der zweiten Richtung und dann wieder in der ersten Richtung über die Flächenschicht geleitet.

Die erste Zuleitstruktur ist vorzugsweise mit einem sich senkrecht zu der Flächenschicht erstreckenden, ersten Zuführkanal zum Zuführen des ersten Fluides gestaltet, der am ersten Rand in dessen Eckbereich zum zweiten Rand angeordnet ist. Die Zuleitung und Ableitung des ersten Fluides ist also vorzugsweise an zwei diametral gegenüberliegenden Ecken des Anoden-Kathoden-Stapels angeordnet, die sich dann insbesondere seitlich neben einer am ersten Rand mittigen Zuleitung bzw. Ableitung eines dritten Fluides befinden, wie unten näher erläutert wird.

Ferner ist an der erfindungsgemäßen Brennstoffzelle vorzugsweise eine dritte Kanalstruktur vorgesehen, die mit einer Vielzahl dritter Kanäle zum Leiten eines dritten Fluides in einer dritten Richtung über die Flächenschicht und mit einer dritten Zuleitstruktur zum Zuleiten des dritten Fluides in die Vielzahl dritter Kanäle gestaltet ist. Dabei ist die dritte Zuleitstruktur ebenfalls an dem ersten Rand angeordnet. Mit der derartigen dritten Kanalstruktur kann das dritte Fluid, welches vorzugsweise ein Kühlmittel ist, insbesondere schräg zur ersten und zweiten Richtung bzw. S-förmig über die Flächenschicht hinweg geleitet werden. Bei der S-förmigen Kanalführung wird das dritte Fluid zunächst in der ersten Richtung, dann in der zweiten Richtung und dann wieder in der ersten Richtung über die Flächenschicht hinweg geleitet.

Dabei ist die dritte Zuleitstruktur vorzugsweise mit einem sich senkrecht zu der Flächenschicht erstreckenden, dritten Zuführkanal zum Zuführen des dritten Fluides gestaltet, der am ersten Rand in dessen Mittenbereich angeordnet ist. Der dritte Zuführkanal befindet sich am dritten Rand also insbesondere zwischen dem ersten und dem zweiten Zuführkanal. Auf diese Weise ist eine zentrale, mittige Zuleitung des dritten Fluides in die dritten Kanäle möglich, die sich dabei insbesondere parallel nebeneinander liegend über die Flächenschicht hinweg erstrecken.

Die Erfindung ist schließlich auch speziell auf ein Verwenden einer derartigen, erfindungsgemäßen Brennstoffzelle an einem Kraftfahrzeug, insbesondere einem Hydrid-Fahrzeug, gerichtet.

Nachfolgend werden Ausführungsbeispiele der erfindungsgemäßen Lösung anhand der beigefügten schematischen Zeichnungen näher erläutert. Es zeigt:
- Fig. 1: eine perspektivische Schnittansicht einer Flächenschicht eines Anoden-Kathoden-Stapels einer Brennstoffzelle gemäß dem Stand der Technik,
- Fig. 2: eine Draufsicht einer ersten Kanalstruktur an einer Flächenschicht gemäß dem Stand der Technik,
- Fig. 3: eine Draufsicht einer zweiten Kanalstruktur und einer dritten Kanalstruktur an einer Flächenschicht gemäß dem Stand der Technik,
- Fig. 4: eine Draufsicht einer ersten Kanalstruktur an einer Flächenschicht mit einer zugehörigen ersten Zuleitstruktur und zugehörigen Randkanälen eines Beispiels nicht gemäß der Erfindung,
- Fig. 5: eine Draufsicht gemäß Fig. 4 eines Ausführungsbeispiels gemäß der Erfindung,
- Fig. 6: eine Draufsicht einer zweiten Kanalstruktur und einer dritten Kanalstruktur an einer Flächenschicht mit einer zugehörigen zweiten und dritten Zuleitstruktur des ersten Ausführungsbeispiels gemäß Fig. 4,
- Fig. 7: eine Draufsicht gemäß Fig. 6 des zweiten Ausführungsbeispiels gemäß Fig. 5.

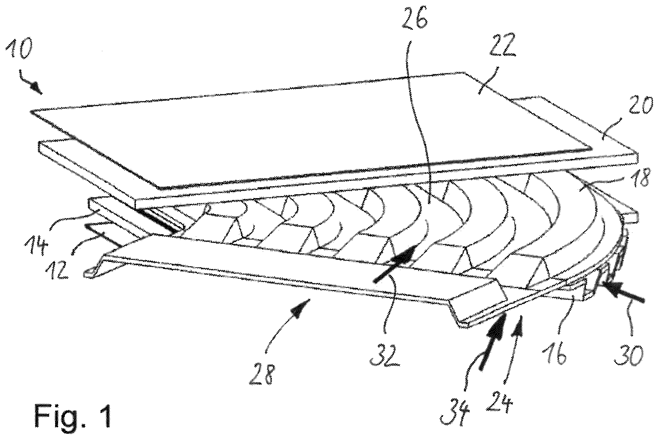

In Fig. 1 ist eine Flächenschicht 10 eines weiter nicht veranschaulichten Anoden-Kathoden-Stapels einer Brennstoffzelle für ein Kraftfahrzeug, insbesondere ein Hybridkraftfahrzeug gemäß dem Stand der Technik veranschaulicht. Die Flächenschicht 10 umfasst in aufeinanderliegenden Schichten eine untere Membran 12 als "Membran Electrode Assembly", eine untere Gasdiffusionslage 14, eine untere Bipolarplatte 16, eine obere Bipolarplatte 18, eine obere Gasdiffusionslage 20 und eine obere Membran 22. Die Membranen 12 und 22 sowie die Gasdiffusionslagen 14 und 20 erstrecken sich dabei über eine aktive Fläche, innerhalb der die Bipolarplatten 16 und 18 Kanalstrukturen 24 mit jeweils einer Vielzahl Kanälen 26 bilden. Diesen Kanalstrukturen 24 vorgelagert befinden sich Zuleitstrukturen 28, die ebenfalls mit den Bipolarplatten 16 und 18 gebildet sind. Die Zuleitstrukturen 28 dienen dazu, insgesamt drei Fluide, nämlich gasförmigen Wasserstoff 30 (H2), Luft 32 sowie flüssiges Kühlmittel 34 in die Kanalstrukturen 24 zu verteilen.

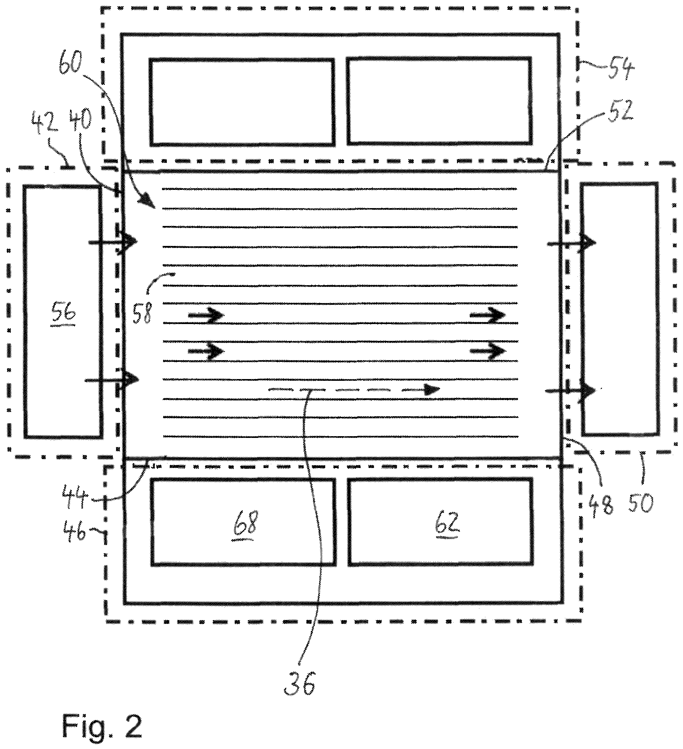

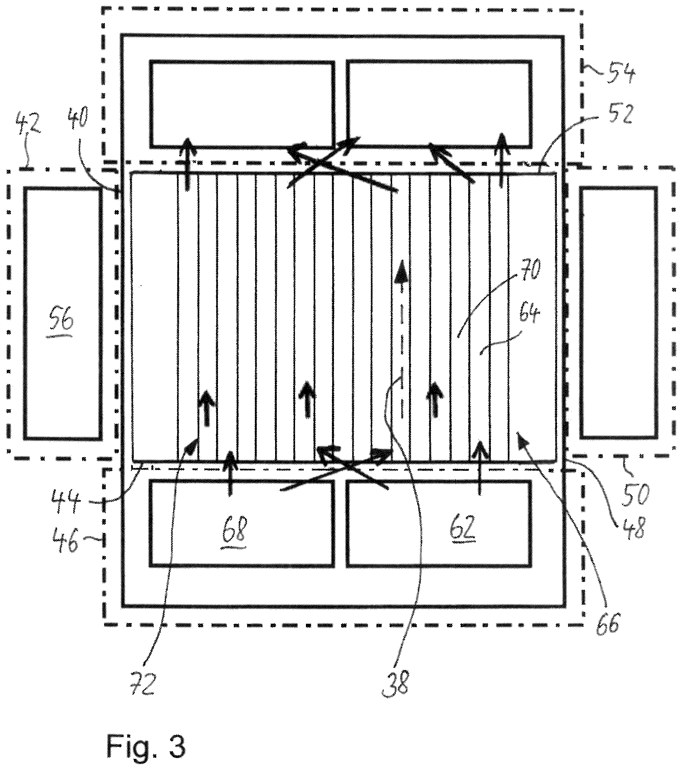

Bei dieser Verteilung der Fluide 30, 32 und 34 besteht die Problematik, dass die drei Fluide 30, 32 und 34 von unterschiedlichen Seiten in die Kanalstrukturen 24 eingeführt werden sollen, damit die Kanalstrukturen 24 als so genanntes Cross-Flow-Field in zumindest zwei Richtungen 36 und 38 durchströmt werden, die quer zueinander gerichtet sind (vergleiche Fig. 2 und 3). Entsprechend muss für die Zuleitstruktur 28 gemäß dem Stand der Technik an einem zugehörigen (hier nicht im Detail weiter dargestellten) Anoden-Kathoden-Stapel mit einer dabei rechteckigen Flächenschicht 10 an einem Rand 40 ein Manifold 42 für das Zuleiten des Fluides 30 angeschlossen und dort abgedichtet sein. Ferner muss an einem, zum Rand 40 quer gerichteten Rand 44 ein Manifold 46 für das Zuleiten des Fluides 32 sowie des Fluides 34 an die jeweilige Flächenschicht 10 angeschlossen und dort abgedichtet sein. Zum Abführen der Fluide 30 bzw. 32 und 34 muss jeweils an dem gegenüberliegenden Rand 48 ein Manifold 50 bzw. dem Rand 52 ein Manifold 54 vorgesehen sein. Insgesamt sind also zumindest vier Manifolds 42, 46, 50 und 54 vorzusehen sowie abzudichten. In dem Manifold 42 befindet sich dann ein Zuführkanal 56 für Wasserstoff, der sich senkrecht zu der Flächenschicht 10 erstreckt und von dem aus der Wasserstoff in Kanäle 58 geleitet wird, die von einer Kanalstruktur 60 gebildet sind. Die Kanäle 58 erstrecken sich dabei in der Richtung 36. In gleicher Weise erstrecken sich in dem Manifold 46 ein Zuführkanal 62 für Luft, der zu Kanälen 64 einer Kanalstruktur 66 führt, sowie ein Zuführkanal 68 für Kühlmittel, der zu Kanälen 70 einer Kanalstruktur 72 führt. Die Kanalstrukturen 66 und 70 erstrecken sich dabei ineinander verzahnt, so dass die Kanäle 64 und 70 parallel zueinander in Richtung 38 und damit quer zur Richtung 36 verlaufen.

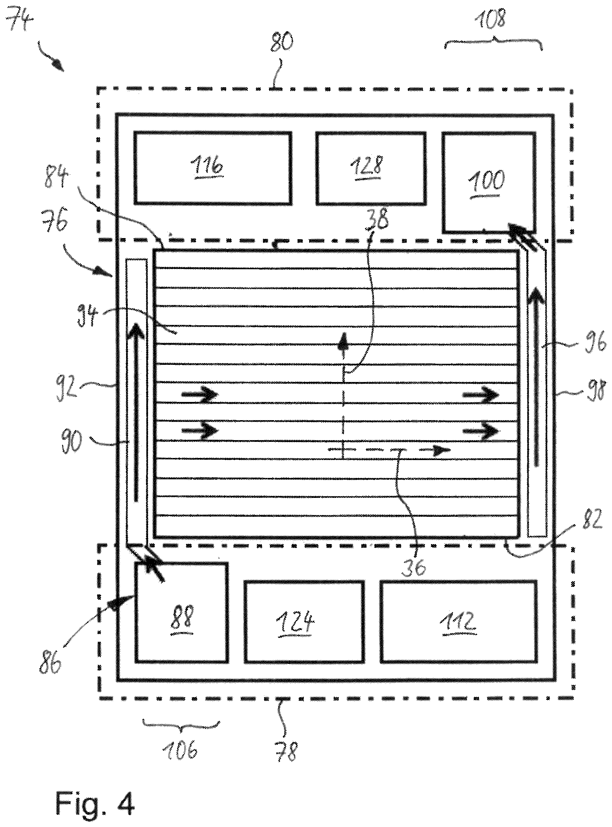

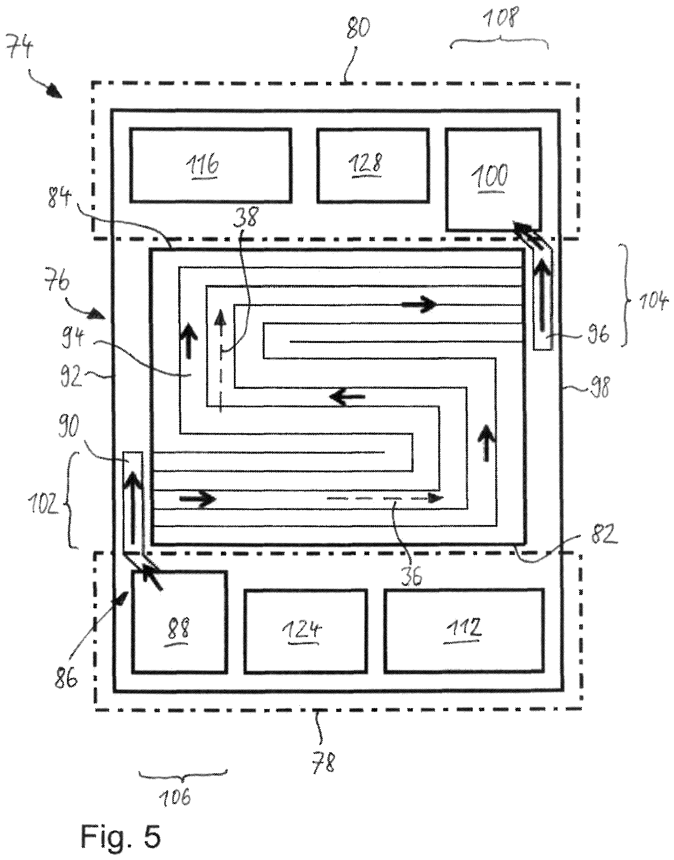

In den Fig. 5 bis 7 sind erfindungsgemäße Brennstoffzellen 74 dargestellt. In der Fig. 4 ist ein Brennstoffzelle 74 dargestellt, die an ihrer jeweiligen Flächenschicht 76 nur zwei zugehörige Manifolds 78 und 80 aufweisen. Der Manifold 78 dient dabei zum Zuleiten sowohl von Wasserstoff als auch von Luft und Kühlmittel in die Flächenschicht 76. Der Manifold 80 dient zum Ableiten dieser drei Medien von der jeweiligen Flächenschicht 76. Der Manifold 78 befindet sich in Bezug auf die Fig. an einem unteren Rand 82 der dabei rechteckigen Flächenschicht 76 und erstreckt sich dort über dessen gesamte Längserstreckung. Der Manifold 80 befindet sich gegenüberliegend an einem oberen Rand 84. Der Manifold 76 ist Bestandteil einer Zuleitstruktur 86 für Wasserstoff, die ferner mit einem die Flächenschicht 76 senkrecht querenden Zuführkanal 88 sowie einem Randkanal 90 gestaltet ist. Der Randkanal 90 erstreckt sich an dem zum Rand 82 und 84 quer verlaufenden, bezogen auf die Fig. linken Rand 92 und führt in eine Vielzahl Kanäle 94. Mit diesen Kanälen 94 wird der derart zugeleitete Wasserstoff über die Flächenschicht 76 gleichmäßig verteilt. Die Kanäle 94 führen dabei in einen Randkanal 96, der an dem, dem Rand 92 gegenüberliegenden Rand 98 der Flächenschicht 76 über dessen gesamte Länge hinweg ausgebildet ist. Aus dem Randkanal 96 strömt der verbrauchte Wasserstoff in einen am Manifold 80 ausgebildeten Abführkanal 100 ab. Die Zuleitstruktur 86 leitete den Wasserstoff also zunächst senkrecht zur Flächenschicht 76 durch den Zuführkanal 88, dann in Richtung 38 durch den Randkanal 90, dann in Richtung 36 durch die Kanäle 94, dann wieder in Richtung 38 durch den Randkanal 96 und schließlich senkrecht zur Flächenschicht 76 durch den Abführkanal 100 ab.

In Fig. 5 ist ein Ausführungsbeispiel einer solchen Brennstoffzelle 74 veranschaulicht, bei dem der Randkanal 90 sich nur über einen Teil 102 der gesamten Länge des Randes 92 erstreckt und der Randkanal 96 sich nur über einen Teil 104 der gesamten Länge des Randes 98 erstreckt. Dabei sind die Kanäle 94 derart zunächst in Richtung 36, dann in Richtung 38, dann entgegen der Richtung 36, dann wieder in Richtung 38 und dann wieder in Richtung 36 geführt, so dass der Wasserstoff insgesamt S-förmig über die Flächenschicht 76 geleitet wird.

Der zugehörige Zuführkanal 86 und Abführkanal 100 erstreckt sich, angeschlossen an den Randkanal 90 bzw. den Randkanal 96, dabei in einem bezogen auf die Fig. 4 und 5 linken Eckbereich 106 des Manifolds 78 bzw. einem rechten Eckbereich 108 des Manifolds 80.

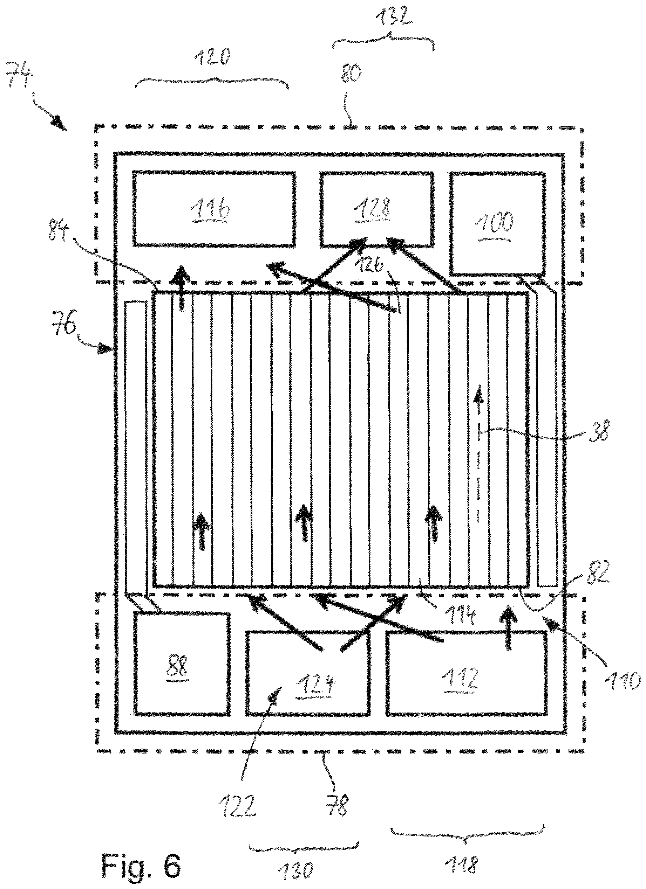

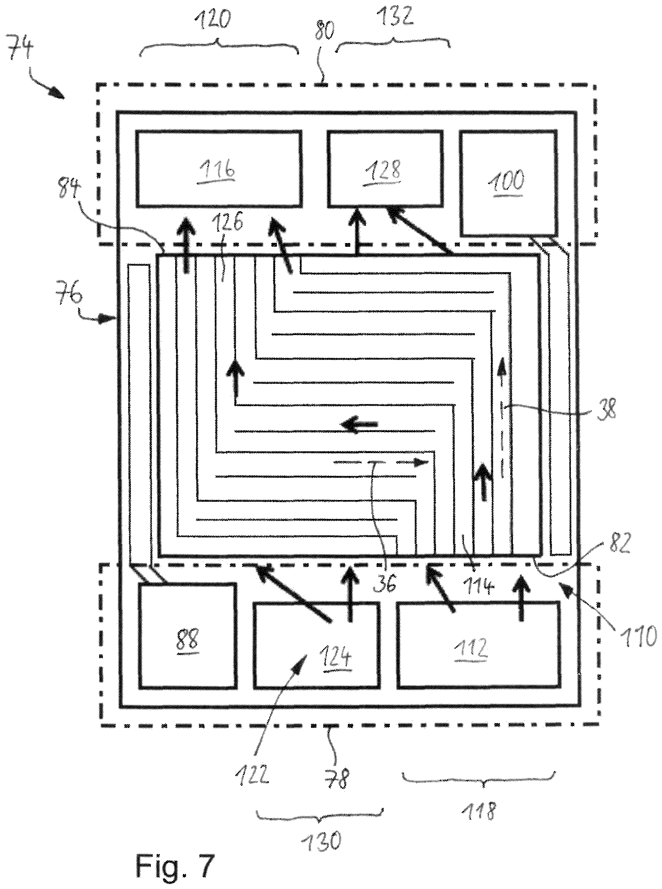

In den Fig. 6 und 7 ist dargestellt, wie bei diesen beiden Ausführungsformen der Brennstoffzelle 74 von den Fig. 4 und 5 die zugehörigen Strukturen für das Zu- und Abführen der Luft und des Kühlmittels gestaltet sein können. Dabei ist in den Manifold 78 auch eine Zuleitstruktur 110 für Luft mit ihrem Zuführkanal 112 angeordnet. Der Zuführkanal 112 führt in eine Vielzahl Kanäle 114, mittels denen die Luft über die Flächenschicht 76 hinweg verteilt und dann in einen Abführkanal 116 im Manifold 80 geleitet wird. Der Zuführkanal 112 befindet sich dabei bezogen auf die Fig. 6 und 7 im rechten Eckbereich 118 des Manifolds 78 und der Abführkanal 116 im linken Eckbereich 120 des Manifolds 80.

Ferner ist bei den Ausführungsformen gemäß den Fig. 4 und 5 mit dem Manifold 78 ein Teil einer Zuleitstruktur 122 für Kühlmittel gestaltet, bei der ein Zuführkanal 124 für Kühlmittel in Kanäle 126 führt, welche sich jeweils parallel neben den Kanälen 114 erstrecken. Mit den Kanälen 126 wird das Kühlmittel dann über die Flächenschicht 76 verteilt in einen Abführkanal 128 geleitet, der in dem Manifold 80 angeordnet ist. Der Zuführkanal 124 für Kühlmittel und der Abführkanal 128 für Kühlmittel erstrecken sich dabei jeweils in einem Mittelbereich 130 bzw. 132 des Manifolds 78 bzw. 80.

Die Fig. 7 zeigt dabei eine Ausführungsvariante, bei der mit den Kanälen 114 und 126 die Luft bzw. das Kühlmittel zusätzlich S-förmig zunächst in Richtung 38, dann entgegen der Richtung 36 und dann wieder in Richtung 38 geleitet wird. Mit dieser Umleitung können die Längen der sich in den einzelnen Kanälen 114 bzw. 126 ergebenden Strömungswege weitgehend gleich lang und damit die Strömungswiderstände weitgehend gleich groß gehalten werden.

### Bezugszeichenliste

- 10: Flächenschicht einer Brennstoffzelle
- 12: untere Membran
- 14: untere Gasdiffusionslage
- 16: untere Bipolarplatte gemäß dem Stand der Technik
- 18: obere Bipolarplatte gemäß dem Stand der Technik
- 20: obere Gasdiffusionslage
- 22: obere Membran
- 24: Kanalstruktur
- 26: Kanal
- 28: Zuleitstruktur gemäß dem Stand der Technik
- 30: Wasserstoff als erstes Fluid
- 32: Luft als zweites Fluid
- 34: Kühlmittel als drittes Fluid
- 36: Richtung der Strömung des Wasserstoffs über der Flächenschicht
- 38: Richtung der Strömung der Luft und des Kühlmittels über der Flächenschicht
- 40: Rand
- 42: Manifold
- 44: Rand
- 46: Manifold
- 48: Rand
- 50: Manifold
- 52: Rand
- 54: Manifold
- 56: Zuführkanal für Wasserstoff
- 58: Kanal für Wasserstoff
- 60: Kanalstruktur für Wasserstoff
- 62: Zuführkanal für Luft
- 64: Kanal für Luft
- 66: Kanalstruktur für Luft
- 68: Zuführkanal für Kühlmittel
- 70: Kanal für Kühlmittel
- 72: Kanalstruktur für Kühlmittel
- 74: Brennstoffzelle gemäß der Erfindung
- 76: Flächenschicht
- 78: Manifold
- 80: Manifold
- 82: Rand
- 84: Rand
- 86: Zuleitstruktur für Wasserstoff
- 88: Zuführkanal für Wasserstoff
- 90: Randkanal
- 92: Rand
- 94: Kanal für Wasserstoff
- 96: Randkanal
- 98: Rand
- 100: Abführkanal für Wasserstoff
- 102: Teil des Randes
- 104: Teil des Randes
- 106: Eckbereich
- 108: Eckbereich
- 110: Zuleitstruktur für Luft
- 112: Zuführkanal für Luft
- 114: Kanal für Luft
- 116: Abführkanal für Luft
- 118: Eckbereich
- 120: Eckbereich
- 122: Zuleitstruktur für Kühlmittel
- 124: Zuführkanal für Kühlmittel
- 126: Kanal für Kühlmittel
- 128: Abführkanal für Kühlmittel
- 130: Mittenbereich
- 132: Mittenbereich

## Patentansprüche

1. Brennstoffzelle (74) mit einem Anoden-Kathoden-Stapel,
der mindestens eine aktive Flächenschicht (76) umfasst,
die mit einer ersten Kanalstruktur mit einer Vielzahl erster Kanäle (94) zum Leiten eines ersten Fluides (30) in einer ersten Richtung (36) über die Flächenschicht (76) gestaltet ist,
die mit einer zweiten Kanalstruktur mit einer Vielzahl zweiter Kanäle (114) zum Leiten eines zweiten Fluides (32) in einer zweiten Richtung (38) über die Flächenschicht (76) gestaltet ist, wobei sich die zweite Richtung (38) im Wesentlichen quer zur ersten Richtung (36) erstreckt,
die mit einer ersten Zuleitstruktur (86) zum Zuleiten des ersten Fluides (30) in die Vielzahl erster Kanäle (94) gestaltet ist und
die mit einer zweiten Zuleitstruktur (110) zum Zuleiten des zweiten Fluides (32) in die Vielzahl zweiter Kanäle (114) gestaltet ist,
wobei die erste Zuleitstruktur (86) und die zweite Zuleitstruktur (110) beide an einem ersten Rand (82) der Flächenschicht (76) angeordnet sind und die erste Zuleitstruktur (86) zusätzlich einen Randkanal (90) zum Zuleiten des ersten Fluides (30) an einen zum ersten Rand (82) quergerichteten, zweiten Rand (92) der Flächenschicht (76) aufweist, und
bei der der Randkanal (90) zum Zuleiten des ersten Fluides (30) sich entlang nur eines Teils (102) des zweiten Randes (92) erstreckt, die ersten Kanäle (94) in der zugehörigen Flächenschicht (76) S-förmig verlaufend gestaltet sind und an einem dem zweiten Rand (92) gegenüberliegenden, dritten Rand (98) der Flächenschicht (76) ein weiterer Randkanal (96) zum Ableiten des ersten Fluides (30) aus der Vielzahl der ersten Kanäle (94) sich entlang nur eines Teils (104) des gesamten dritten Randes (98) erstreckt.

2. Brennstoffzelle nach Anspruch 1,
bei der die Flächenschicht (76) rechteckig gestaltet ist, der erste Rand (82) eine erste Längsseite dieser Rechteckform ist und der zweite Rand (92) eine zur ersten Längsseite benachbarte, zweite Längsseite der Rechteckform ist.

3. Brennstoffzelle nach einem der Ansprüche 1 bis 2, bei der die erste Zuleitstruktur (86) mit einem sich senkrecht zu der Flächenschicht (76) erstreckenden, ersten Zuführkanal (88) zum Zuführen des ersten Fluides (30) gestaltet ist, der am ersten Rand (82) in dessen Eckbereich (106) zum zweiten Rand (92) angeordnet ist.

4. Brennstoffzelle nach einem der Ansprüche 1 bis 3, bei der die zweite Zuleitstruktur (110) mit einem sich senkrecht zu der Flächenschicht (76) erstreckenden, zweiten Zuführkanal (112) zum Zuführen des zweiten Fluides (32) gestaltet ist, der am ersten Rand (82) in dessen vom zweiten Rand (92) abgewandten Eckbereich (118) angeordnet ist.

5. Brennstoffzelle nach einem der Ansprüche 1 bis 4, die mit einer dritten Kanalstruktur mit einer Vielzahl dritter Kanäle (126) zum Leiten eines dritten Fluides (34) in einer dritten Richtung über die Flächenschicht (76) gestaltet ist und
die mit einer dritten Zuleitstruktur (122) zum Zuleiten des dritten Fluides (34) in die Vielzahl dritter Kanäle (126) gestaltet ist,
wobei die dritte Zuleitstruktur (122) ebenfalls an dem ersten Rand (82) angeordnet ist.

6. Brennstoffzelle nach Anspruch 5, bei der die dritte Zuleitstruktur (122) mit einem sich senkrecht zu der Flächenschicht (76) erstreckenden, dritten Zuführkanal (124) zum Zuführen des dritten Fluides (34) gestaltet ist, der am ersten Rand (82) in dessen Mittenbereich (130) angeordnet ist.

7. Verwenden einer Brennstoffzelle (74) nach einem der Ansprüche 1 bis 6 an einem Kraftfahrzeug.

## Claims

1. A fuel cell (74) with an anode-cathode stack which comprises at least one active surface layer (76),
which is formed with a first channel structure having a plurality of first channels (94) for conducting a first fluid (30) in a first direction (36) over the surface layer (76),
which is formed with a second channel structure having a plurality of second channels (114) for conducting a second fluid (32) in a second direction (38) over the surface layer (76), wherein the second direction (38) extends substantially transversely to the first direction (36), and
which is formed with a first feed structure (86) for feeding the first fluid (30) into the plurality of first channels (94), and
which is formed with a second feed structure (110) for feeding the second fluid (32) into the plurality of second channels (114), wherein the first feed structure (86) and the second feed structure (110) are both arranged on a first edge (82) of the surface layer (76) and the first feed structure (86) additionally has an edge channel (90) for feeding the first fluid (30) to a second edge (92) of the surface layer (76) which is oriented transversely to the first edge (82), and wherein the edge channel (90) for feeding the first fluid (30) extends along only part (102) of the second edge (92), the first channels (94) are designed running in an S shape in the associated surface layer (76), and, on a third edge (98) of the surface layer (76) opposite the second edge (92), a further edge channel (96) for discharging the first fluid (30) from the multiplicity of first channels (94) extends along only part (104) of the entire third edge (98).

2. A fuel cell according to claim 1,
in which the surface layer (76) is rectangular, the first edge (82) is a first longitudinal side of this rectangular shape and the second edge (92) is a second longitudinal side of the rectangular shape adjacent to the first longitudinal side.

3. A fuel cell according to any one of claims 1 to 2, in which the first feed structure (86) is designed with a first feed channel (88) for feeding the first fluid (30), which first feed channel extends perpendicularly to the surface layer (76) and is arranged on the first edge (82) in its corner region (106) to the second edge (92).

4. A fuel cell according to any one of claims 1 to 3,
in which the second feed structure (110) is designed with a second feed channel (112) for feeding the second fluid (32), which second feed channel extends perpendicularly to the surface layer (76) and is arranged on the first edge (82) in its corner region (118) facing away from the second edge (92).

5. A fuel cell according to any one of claims 1 to 4, which is designed with a third channel structure having a multiplicity of third channels (126) for conducting a third fluid (34) in a third direction over the surface layer (76), and
which is designed with a third feed structure (122) for feeding the third fluid (34) into the multiplicity of third channels (126),
wherein the third feed structure (122) is also arranged on the first edge (82).

6. A fuel cell according to claim 5,
in which the third feed structure (122) is designed with a third feed channel (124) for feeding the third fluid (34), which third feed channel extends perpendicularly to the surface layer (76) and is arranged on the first edge (82) in its middle region (130).

7. Use of a fuel cell (74) according to any one of claims 1 to 6 on a motor vehicle.

## Revendications

1. Pile à combustible (74) comportent un empilement d'anodes et de cathodes comprenant au moins une couche surfacique active (76) qui est conformée avec une première structure de canaux ayant un ensemble de premiers canaux (94) permettant de transférer un premier fluide (30) dans une première direction (36) sur la couche surfacique (76), et avec une seconde structure de canaux ayant un ensemble de seconds canaux (114) permettant de transférer un second fluide (32) dans une seconde direction (38) sur la couche surfacique (76), la seconde direction (38) s'étendant essentiellement transversalement à la première direction (36), ainsi qu'avec une première structure d'alimentation (86) permettant de transférer le premier fluide (30) dans les premiers canaux de l'ensemble de premiers canaux (94), et avec une seconde structure d'alimentation (110) permettant de transférer le second fluide (32) dans les seconds canaux de l'ensemble de seconds canaux (114), la première structure d'alimentation (86) et la seconde structure d'alimentation (110) étant toutes deux situées sur un premier bord (82) de la couche surfacique (76) et la première structure d'alimentation (86) comportant en outre un canal de bord (90) permettant de transférer le premier fluide (30) sur un second bord (92) de la couche surfacique (76) dirigé transversalement au second bord (82), et dans laquelle le canal de bord (90) permettant de transférer le premier fluide (30) s'étend uniquement le long d'une partie (102) du second bord (92), les premiers canaux (94) sont conformés pour s'étendre en forme de S dans la couche surfacique (76) associée, et sur un troisième bord (98) de la couche surfacique (76) situé à l'opposée du second bord (92) s'étend un autre canal de bord (96) permettant d'évacuer le premier fluide (30) des premiers canaux de l'ensemble de premiers canaux (94) ce, uniquement sur une partie (104) de la totalité du troisième bord (98).

2. Pile à combustible conforme à la revendication 1,
dans laquelle la couche surfacique (76) est rectangulaire, le premier bord (82) est un premier côté longitudinal de ce rectangle et le second bord (92) est le second côté longitudinal de ce rectangle voisin du premier côté longitudinal.

3. Pile à combustible conforme à l'une des revendications 1 et 2,
dans laquelle la première structure d'alimentation (86) est conformée avec un premier canal de transfert (88) permettant le transfert du premier fluide (30) s'étendant perpendiculairement à la couche surfacique (76), et qui est situé sur le premier bord (82), dans sa zone de coin (106) avec la second bord (92).

4. Pile à combustible conforme à l'une des revendications 1 à 3,
dans laquelle la seconde structure d'alimentation (110) est conformée avec un second canal de transfert (112) permettant le transfert du second fluide (32) s'étendant perpendiculairement à la couche surfacique (76) et qui est situé sur le premier bord (82), dans sa zone de coin (118) située à l'opposé du second bord (92).

5. Pile à combustible conforme à l'une des revendications 1 à 4,
qui est conformée avec une troisième structure de canaux comprenant un ensemble de troisièmes canaux (126) permettant de transférer un troisième fluide (34) dans une troisième direction sur la couche surfacique (76), et avec une troisième structure d'alimentation (122) permettant le transfert du troisième fluide (34) dans les canaux de l'ensemble de troisièmes canaux (126), la troisième structure d'alimentation (122) étant également située sur le premier bord (82).

6. Pile à combustible conforme à la revendication 5,
dans laquelle la troisième structure d'alimentation (122) est conformée avec un troisième canal de transfert (124) permettant de transférer le troisième fluide (34), s'étendant perpendiculairement à la couche surfacique (76) et qui est situé sur le premier bord (82), dans la zone médiane (130) de celui-ci.

7. Utilisation d'une pile à combustible (74) conforme à l'une des revendications 1 à 6,
dans un véhicule automobile.
